## Europäisches Patentamt

## European Patent Office

## Office européen des brevets

(19)

(11) Veröffentlichungsnummer : **0 189 733**
**B1**

(12) **EUROPÄISCHE PATENTSCHRIFT**

(45) Veröffentlichungstag der Patentschrift :
26.04.89

(51) Int. Cl.⁴ : **F 24 J   3/08**

(21) Anmeldenummer : **85810032.4**

(22) Anmeldetag : **01.02.85**

(54) Wärmepumpenanlage zur Wärmegewinnung aus dem Erdreich.

(43) Veröffentlichungstag der Anmeldung :
06.08.86 Patentblatt 86/32

(45) Bekanntmachung des Hinweises auf die Patenterteilung : 26.04.89 Patentblatt 89/17

(84) Benannte Vertragsstaaten :
**BE CH DE FR GB LI NL SE**

(56) Entgegenhaltungen :
WO–A–80 /027 36
DE–A– 3 026 638
DE–A– 3 149 636
GB–A– 2 045 909

(73) Patentinhaber : **Gut, Leo**
**Seestrasse 110**
**CH-6052 Hergiswil/NW (CH)**

(72) Erfinder : **Gut, Leo**
**Seestrasse 110**
**CH-6052 Hergiswil/NW (CH)**

(74) Vertreter : **Werffeli, Heinz R., Dipl.-Ing.**
**Postfach 275 Waldgartenstrasse 12**
**CH-8125 Zürich-Zollikerberg (CH)**

Jouve, 18, rue St-Denis, 75001 Paris, France

## Beschreibung

Die Erfindung betrifft eine Wärmepumpenanlage gemäss dem Oberbegriff des Anspruchs 1, bzw. des Anspruchs 4.

Es ist bereits bekannt, zur Beheizung von Gebäuden Wärmepumpenanlagen zu verwenden, bei denen zur Ausnutzung der Erdbodenwärme ein grossflächiger Wärmeaustauscher neben dem zu beheizenden Gebäude in diesen umgebenden Garten angeordnet wird. Dieses System weist die Nachteile auf, dass dazu ein relativ grosser Garten vorhanden sein muss, und relativ hohe Investitionen für den im Garten zu verlegenden Wärmeaustauscher erforderlich sind. Ausserdem ist die Versenkungstiefe des Wärmeaustauscher aus Kostengründen auf eine relativ niedrige Versenkungstiefe begrenzt.

Die Ausnutzung der Luftwärme zur Beheizung von Gebäuden mittels Wärmepumpenanlagen ist insbesondere bei tiefen Aussentemperaturen ebenfalls recht problematisch.

Es ist ferner aus der WO 80/02736 bekannt, einen durch ein Rohr gebildeten Gründungspfahl direkt als Zirkulationsrohr für das Wärmeaustauschmedium und als Wärmeaustauscher zu verwenden. Dies hat jedoch den Nachteil, dass bei der Bildung eines Risses im Gründungspfahl oder bei einer Verstopfung des durch diesem Pfahl gebildeten Zirkulationsrohrabschnittes der gesamte Pfahl als Wärmeaustauscher für die gesamte weitere Zukunft total ausfällt und nicht mehr repariert werden. Wie man weiss, muss bei jedem Bauwerk jedoch langfristig mit der Entstehung von Rissen, d. h. bei einem solchen direkt als Zirkulationsrohr und Wärmeaustauscher dienenden Pfahl mit einem totalen und nicht mehr behebbaren Ausfall dieses Wärmeaustauscherteiles sowie einer allfälligen Grundwasserverschmutzung durch ins Grundwasser austretendes Wärmeaustauschermedium gerechnet werden, was einen äusserst gravierenden Nachteil darstellt.

Gleich verhält es sich gemäss der DE-A-3 026 638 bei direkt in Betonpfählen ohne Spiel einbetonierten, für den Durchfluss eines Wärmeaustauschermediums bestimmten Zirkulationsleitungen.

Aufgabe der vorliegenden Erfindung ist die Schaffung einer Wärmepumpenanlage, welche diese Nachteile nicht aufweist, indem die Zirkulationsleitungen auswechselbar, d. h. mit relativ viel Spiel und zur Erhöhung der Wärmeaustauscherwirkung gewunden im Gründungspfahl angeordnet sind.

Diese Aufgabe wird bei einer Wärmepumpenanlage der eingangs genannten Art erfindungsgemäss nach Anspruch 1 oder 4 gelöst.

Zweckmässige Weiterausgestaltungen der erfindungsgemässen Wärmepumpenanlage sind Gegenstand der Ansprüche 2, 3 und 5 bis 7.

Nachstehend wird die Erfindung anhand der Zeichnung beispielsweise erläutert. Es zeigt

Fig. 1 in perspektivischer Ansicht schematisch eine beispielsweise Ausführungsform einer erfindungsgemässen Wärmepumpenanlage ;

Fig. 2 in vergrössertem Massstab einen Schnitt längs der Linie II-II in Fig. 1 ;

Fig. 3 in vergrössertem Massstab und in perspektivischer Ansicht einen einzelnen Betonpfahl der in Figur 1 dargestellten Anlage mit gestrichelt eingezeichnetem Strömungskanalverlauf ;

Fig. 4 einen Grundriss des in Figur 3 dargestellten Pfahls ;

Fig. 5 in vergrössertem Massstab einen Schnitt längs der Linie V-V in Fig. 3 ;

Fig. 6 in vergrössertem Massstab und in perspektivischer Ansicht, analog zu Fig. 3, einen Holzpfahl mit eingelegter Zirkulationsleitung ;

Fig. 7 einen Grundriss des in Fig. 6 dargestellten Pfahls ; und

Fig. 8 in vergrössertem Massstab und in perspektivischer Ansicht, analog zu Fig. 6, eine weitere beispielsweise Ausführungsform eines mit eingelegter Zirkulationsleitung versehenen Pfahles.

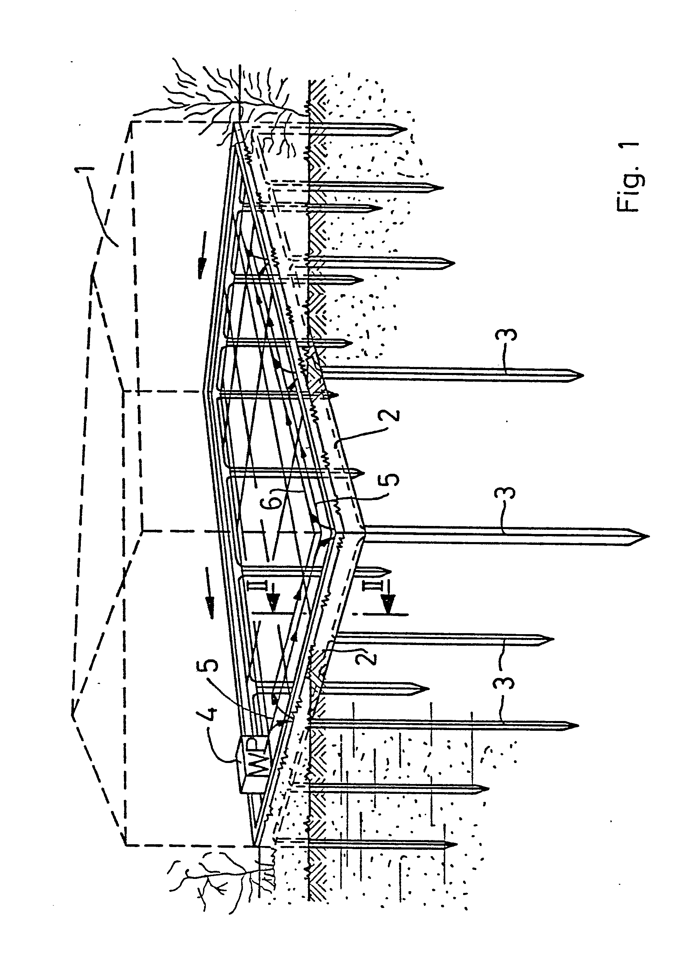

Wie aus Figur 1 ersichtlich, wird das auf schlechtem Baugrund (zum Beispiel im verlandeten Uferbereich eines Sees) zu erstellende Gebäude 1 über einen Pfahlriegel 2 auf tief in das Erdreich eingetriebenen, vorfabrizierten Betonpfählen 3 abgestützt.

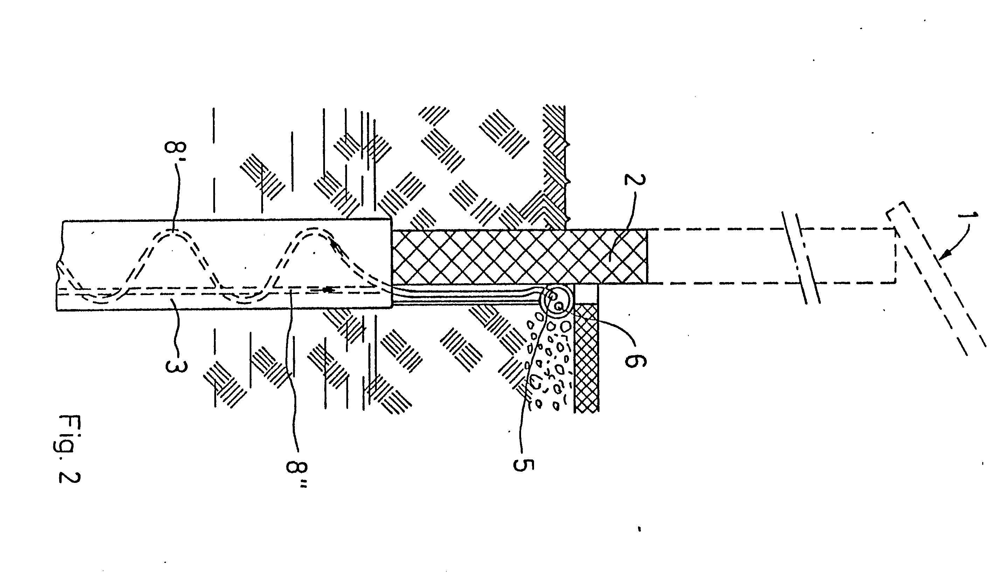

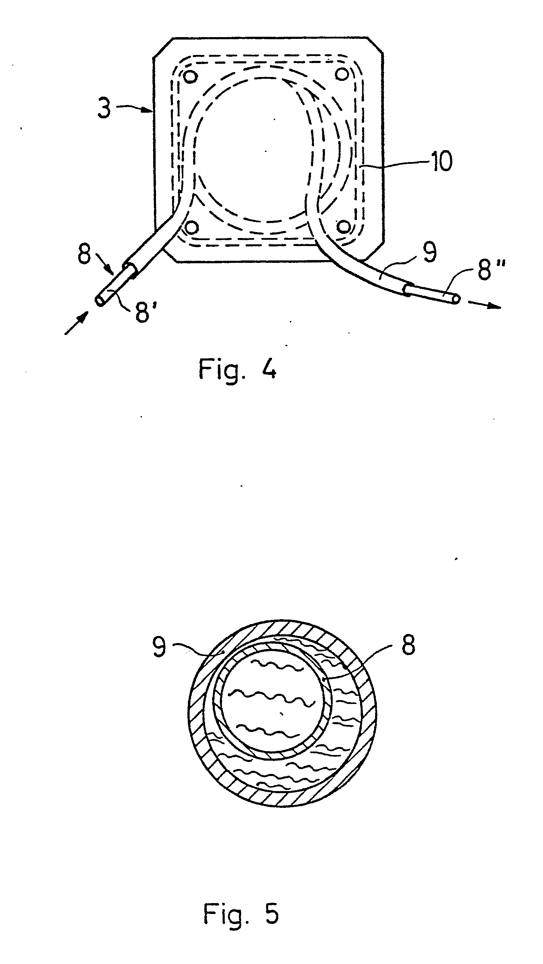

Die einzelnen dabei verwendeten Betonpfähle 3 sind dabei wie aus den Fig. 2 bis 5 ersichtlich, zur Bildung eines mit der Wärmepumpe 4 verbundenen Wärmeaustauschers über die Vor- und Rücklaufleitungen 5 und 6 mit je einer Wärmeaustauschereinheit 7 verbunden.

Selbstverständlich können diese einzelnen Wärmeaustauschereinheiten 7 auch gruppenweise über die Vor- und Rücklaufleitungen 5 und 6 zusammengefasst und dadurch auch gruppenweise an die Wärmepumpe 4 zu- bzw. von dieser abgeschaltet werden, was zum Beispiel Unterhaltsarbeiten an einzelnen Gruppen ohne Unterbruch der Beheizung des Gebäudes ermöglicht.

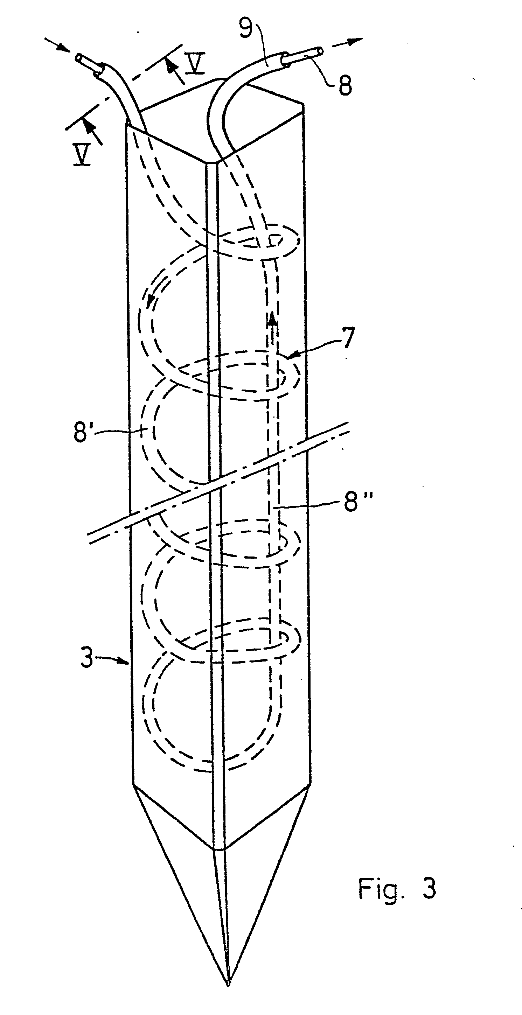

Wie aus den Figuren 3, 4 und 5 ersichtlich, werden die in den einzelnen Pfählen 3 gebildeten Wärmeaustauschereinheiten 7 durch je eine mit der Wärmepumpe 4 verbundene Zirkulationsleitung 8 gebildet, welche in einem die letztere mit Spiel umgebenden Hüllrohr 9 auswechselbar verläuft. Zur Wärmeübertragung vom Erdreich auf das in der Zirkulationsleitung 8 durchströmende flüssige Wärmeaustauschmedium ist der Zwischenraum zwischen der Innenseite des Hüllrohres 9 und der Aussenseite des in letzterem auswechselbar angeordneten Zirkulationsleitung 8 mit einer wärmeübertragenden Flüssigkeit, z. B. Wasser, ausgefüllt.

Wie aus den Figuren 2, 3 und 4 ersichtlich, verläuft der im Innern des Hüllrohres 9 angeordnete Vorlauf 8 der einzelnen Wärmeaustauscheinheiten 7 zur Erhöhung der Wärmeaustauscherfläche schraubenlinienförmig im äusseren Bereich der mit Eisengitter 10 bewehrten Betonpfähle 3, im Innern derselben, nach unten und anschliessend als Rücklauf 8" im Innern der schraubenlinienförmigen Windungen des Vorlaufs 8' gestreckt nach oben. Selbstverständlich sind auch andere Anordnungen der vom Hüllrohr 9 umgebenen Zirkulationsleitung 8 im Innern des Betonpfahles 3 möglich.

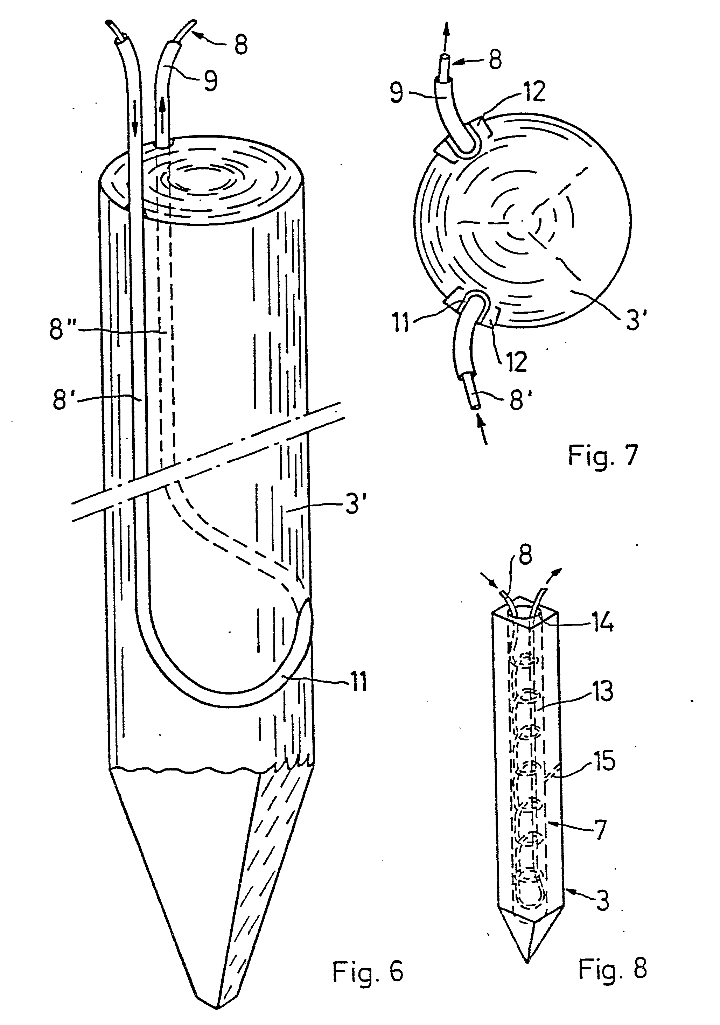

Wie aus den Figuren 6 und 7 ersichtlich, können auch Holzpfähle 3' für die Pfahlgründung verwendet werden. Dabei wird das die Zirkulationsleitung 8 aufnehmende Hüllrohr 9 in einen längs der Aussenseite des Holzpfahles 3' eingefrästen Kanal 11 eingelegt, und mittels einer aus rostfreiem Stahl bestehenden, Wasser bis zum Hüllrohr 9 durchlassenden Schutz- und Halteabdeckung 12 in diesem Kanal 11 fixiert.

Wie aus Figur 8 ersichtlich, ist es auch möglich, die Zirkulationsleitung 8 in einer in Längsrichtung des Pfahles 3 bis in dessen unteren Endbereich sich erstreckenden Bohrung 13 anzuordnen. Dabei verläuft die Zirkulationsleitung 8 zur Vergrösserung der Wärmeaustauschfläche mindestens über einen Teil ihrer Länge schraubenlinienförmig in der Bohrung 13.

Selbstverständlich sind auch andere Ausführungsformen von in der Bohrung 13 anordbaren Wärmeaustauschern möglich.

Die Bohrung 13 kann z. B. derart gebildet werden, indem man bei der Herstellung des Pfahles 3 ein unten verschlossenes Rohr 14 im Innern des Pfahles 3 anordnet.

Wenn das Rohr 14 aus wasserundurchlässigem Material besteht, dann muss die Bohrung 13 zur Uebertragung von Wärme aus dem den Pfahl 3 umgebenden Erdreich bzw. aus dem das letztere durchsetzenden Grundwasser auf die das Zirkulationsrohr 8 durchströmende Flüssigkeit mit Wasser gefüllt sein.

Wenn das Rohr 14 z. B. analog einer Sickerleitung aus wasserdurchlässigem Material besteht, dann kann es zweckmässig sein, wenn man mindestens einen Teil des dieses Rohr 14 umgebenden Pfahlquerschnittes ebenfalls wasserdurchlässig ausbildet, so dass Wasser aus dem den Pfahl 3 umgebenden Erdreich in die derart gebildete, die Wärmeaustauschereinheit 7 aufnehmende Bohrung 13 strömen kann.

Es ist auch denkbar, das Innere der Bohrung 13 über eine Mehrzahl von Kanälen 15 mit der Aussenseite der Pfähle 3 zu verbinden. Wenn vorfabrizierte Pfähle 3 verwendet werden, dann ist es zweckmässig, wenn diese Kanäle 15 nach aussen schräg nach oben verlaufen, um sicherzustellen, dass beim Einrammen der Pfähle 3 so wenig Erdreich wie möglich in die Kanäle 15 gepresst wird.

**Patentansprüche**

1. Wärmepumpenanlage zur Wärmegewinnung aus dem Erdreich mittels einer mit einem in letzterem angeordneten Wärmeaustauscher verbundenen Wärmepumpe zur Beheizung eines auf einer Pfahlgründung angeordneten Gebäudes, wobei mindestens ein Teil der Pfahlgründung als Wärmeaustauscher ausgebildet ist, dadurch gekennzeichnet, dass die zur Durchleitung des Wärmeaustauschmediums bestimmten, in den Pfählen (3) verlaufenden Strömungskanäle durch Zirkulationsleitungen (8) gebildet werden, die so ausgebildet sind, dass sie in einem die letzteren mit Spiel umgebenden, mindestens zum Teil gewunden verlaufend im zugeordneten Pfahl (3) angeordneten Hüllrohr (9) auswechselbar angeordnet sind, und dass zwischen der Innenseite des Hüllrohres (9) und der Aussenseite der in letzterem angeordneten Zirkulationsleitung (8) eine wärmeübertragende Flüssigkeit vorgesehen ist.

2. Anlage nach Anspruch 1, dadurch gekennzeichnet, dass die Pfähle (3) der Pfahlgründung aus Holz bestehen und die Hüllrohre (9) in mindestens zum Teil schraubenlinienförmig längs der Aussenseite der Pfähle (3') eingefrästen Kanälen (11) verlaufen.

3. Anlage nach Anspruch 1, dadurch gekennzeichnet, dass die Pfähle (3) der Pfahlgründung aus Beton bestehen und die Hüllrohre (9) mindestens zum Teil schraubenlinienförmig im Innern der Pfähle (3) verlaufen.

4. Wärmepumpenanlage zur Wärmegewinnung aus dem Erdreich mittels einer mit einem in letzterem angeordneten Wärmeaustauscher verbundenen Wärmepumpe zur Beheizung eines auf einer Pfahlgründung angeordneten Gebäudes, wobei mindestens ein Teil der Pfahlgründung als Wärmeaustauscher ausgebildet ist, und die zur Durchleitung des Wärmeaustauschmediums bestimmten, in den Pfählen verlaufenden Strömungskanäle durch Zirkulationsleitungen gebildet werden, welche mindestens zum Teil gewunden verlaufen, dadurch gekennzeichnet, dass die Zirkulationsleitungen (8) in einer in Längsrichtung des Pfahles (3) sich erstreckenden Bohrung (13) auswechselbar angeordnet sind, und dass zwischen der Innenseite dieser Bohrung (13) und der Aussenseite der in letzterer angeordneten Zirkulationsleitung eine Wärmeübertragungsflüssigkeit vorgesehen ist.

5. Anlage nach Anspruch 4, dadurch gekennzeichnet, dass die Pfähle mindestens über einen Teil ihrer Länge aus einem wasserdurchlässigen Material bestehen, oder mit von der Bohrung (13) bis auf die Pfahlaussenseite sich erstrekkenden Kanälen (15) versehen sind.

6. Anlage nach einem der Ansprüche 1 bis 5, dadurch gekennzeichnet, dass die in den einzelnen Pfählen (3, 3') verlaufenden Zirkulationsleitungen (8) gruppenweise zusammengefasst und gruppenweise an die Wärmepumpe zu-bzw. von dieser abschaltbar sind.

7. Anlage nach einem der Ansprüche 1 bis 6, dadurch gekennzeichnet, dass die Vorläufe (8') der in den einzelnen Pfählen (3, 3') angeordneten Wärmeaustauscheinheiten (7) mindestens gruppenweise mit einer gemeinsamen Vorlaufzufuhrleitung (5) und die Rückläufe (8") der in den einzelnen Pfählen (3, 3') angeordneten Wärmeaustauscheinheiten (7) mindestens gruppenweise mit einer gemeinsamen Rücklaufsammelleitung (6) verbunden sind.

## Claims

1. Heat pump system for the recovery of heat from the ground by means of a heat pump connected to a heat exchanger arranged in the ground, for heating a building arranged on a pile foundation, at least part of the pile foundation being constructed as a heat exchanger, characterised in that the flow channels for conducting the heat exchange medium and extending in the piles (3) are formed from circulation lines (8) which are constructed such that they are replaceably arranged in a jacket tube (9) which surrounds them with play and is arranged running at least partly coiled in the associated pile (3), and in that between the inside of the jacket tube (9) and the outside of the circulation line (8) arranged in the latter there is provided a heat exchanging liquid.

2. System according to Claim 1, characterised in that the piles (3) of the pile foundation are of wood and the jacket tubes (9) run in channels (11) cut at least partly helically along the outside of the piles (3').

3. System according to Claim 1, characterised in that the piles (3) of the pile foundation are of concrete and the jacket tubes (9) run at least partly helically inside the piles (3).

4. Heat pump system for the recovery of heat from the ground by means of a heat pump connected to a heat exchanger arranged in the ground, for heating a building arranged on a pile foundation, at least part of the pile foundation being constructed as a heat exchanger, and the flow channels for conducting the heat exchange medium and extending in the piles being formed from circulation lines which run at least partly coiled, characterised in that the circulation lines (8) are replaceably arranged in a bore (13) extending in the longitudinal direction of the pile (3), and in that between the inside of this bore (13) and the outside of the circulation line arranged in the latter there is provided a heat exchange liquid.

5. System according to Claim 4, characterised in that the piles are, at least over part of their length, of a water-permeable material, or are provided with channels (15) extending from the bore (13) to the outside of the pile.

6. System according to one of Claims 1 to 5, characterised in that the circulation lines (8) running in the individual piles (3, 3') are grouped together and can be connected to the heat pump or disconnected from the latter in groups.

7. System according to one of Claims 1 to 6, characterised in that the forward-running sections (8') of the heat exchange units (7) arranged in the individual piles (3, 3') are connected, at least in groups, to a common forward-running feed line (5), and the return sections (8") of the heat exchange units (7) arranged in the individual piles (3, 3') are connected, at least in groups, to a common return collection line (6).

## Revendications

1. Installation de thermopompage pour la production de chaleur extraite de la terre, à l'aide d'une thermopompe thermique, reliée à un échangeur thermique, disposée dans la terre pour le chauffage d'un bâtiment à fondation sur pieux, dont au moins une partie de la fondation sur pieux est exécutée en forme d'un échangeur thermique, caractérisée en ce que les canalisations d'écoulement, destinées à la conduction du fluide d'échange thermique, prévues dans les pieux (3), sont formées par des conduites de circulation (8), exécutées de telle manière, qu'elles sont montées avec un certain jeu et de façon échangeable dans un tuyau enveloppant (9), disposées de façon, au moins partiellement, en forme d'hélice dans le pieu (3) correspondant, et qu'entre l'intérieur du tuyau enveloppant (9) et l'extérieur de la conduite de circulation (8), disposée dans ce dernier, un fluide transmettant la chaleur est prévu.

2. Installation selon la revendication 1, caractérisée en ce que les pieux (3) de la fondation sur pieux sont en bois et que les tuyaux enveloppants (9) sont arrangés dans des canalisations (11) fraisées dans l'extérieur des pieux (3') de façon, au moins partiellement, en forme d'hélice.

3. Installation selon la revendication 1, caractérisée en ce que les pieux (3) de la fondation sur pieux sont en béton et que les tuyaux enveloppants (9) sont disposés de façon, au moins partiellement, en forme d'hélice à l'intérieur des pieux (3).

4. Installation de thermopompage pour la production de chaleur extraite de la terre, à l'aide d'une thermopompe thermique, reliée à un échangeur thermique, disposé dans la terre pour le chauffage d'un bâtiment à fondation sur pieux, dont au moins une partie de la fondation sur pieux est exécutée en forme d'un échangeur thermique, et que les canalisations d'écoulement, destinées à la conduction du fluide d'échange thermique, prévues dans les pieux, sont formées par des conduites de circulation, qui sont disposées, au moins partiellement, en forme d'hélice, caractérisée en ce que les conduites de circulation (8) sont disposées de façon échangeable dans un alésage (13) s'étendant dans la direction longitudinale du pieu (3), et qu'entre l'intérieur de cet alésage (13) et l'extérieur de la canalisation de circulation disposée dans ce dernier, un fluide, transmettant la chaleur est prévu.

5. Installation selon la revendication 4, caractérisée en ce que les pieux consistent, au moins sur une partie de leur longueur en une matière perméable à l'eau, ou qu'ils sont munis de canalisations (15) s'étendant de l'alésage (13) jusqu'à la face extérieure du pieu.

6. Installation selon une des revendications 1 à 5, caractérisée en ce que les canalisations de circulation (8), disposées dans les différents pieux (3, 3') sont assemblées en groupes et que chaque groupe peut être connecté à, respectivement déconnecté de, de la thermopompe.

7. Installation selon une des revendications 1 à 6, caractérisée en ce que les amorces (8') des unités d'échange thermique (7) disposées dans les différents pieux (3, 3') sont, au moins en groupes, connectées à une conduite d'amorce (5) commune et les retours (8") des unités d'échange thermique (7) disposées dans les différents pieux (3, 3') sont, au moins en groupes, connectées à une conduite collectrice de retours (6) commune.

Fig. 1

Fig. 2

Fig. 3

Fig. 4

Fig. 5

Fig. 6

Fig. 7

Fig. 8